(19)

Europäisches
Patentamt
European
Patent Office
Office européen
des brevets

(11) **EP 4 439 742 A1**

(12) **EUROPEAN PATENT APPLICATION**

(43) Date of publication:
02.10.2024 Bulletin 2024/40

(21) Application number: 23165136.5

(22) Date of filing: 29.03.2023

(51) International Patent Classification (IPC):
**H01M 8/0432** (2016.01)    **H01M 8/04537** (2016.01)
**H01M 8/04746** (2016.01)

(52) Cooperative Patent Classification (CPC):
**H01M 8/04768; H01M 8/04358; H01M 8/04619;
H01M 8/04753;** H01M 2250/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Airbus Operations GmbH**
  **21129 Hamburg (DE)**
• **Airbus S.A.S.**
  **31700 Blangnac (FR)**

(72) Inventors:
• **Wolff, Christian**
  **21129 Hamburg (DE)**
• **Simionato Neto, Norberto**
  **31700 Blagnac (FR)**
• **Liphardt, Leonard**
  **21129 Hamburg (DE)**

(74) Representative: **Schornack, Oliver
Wuesthoff & Wuesthoff
Patentanwälte und Rechtsanwalt PartG mbB
Schweigerstraße 2
81541 München (DE)**

(54) **FUEL CELL SYSTEM AND METHOD OF CONTROLLING THE SAME TO OPTIMIZE ITS OPERATION**

(57)    Disclosed is a method for controlling a fuel cell
(100) during operation of the fuel cell (100). The method
comprises determining a power requirement of a load
(140) electrically connected with the fuel cell (100), sens-
ing an electromotive force of the fuel cell (100), deter-
mining an available electrical power from the fuel cell
(100) based on the sensed electromotive force of the fuel
cell (100), calculating a deviation between the determined power requirement of the load (140) and the avail-
able electrical power from the fuel cell (100), and con-
trolling thermal operating parameters of the fuel cell (100)
to compensate for the calculated deviation. Furthermore,
a fuel cell system (100) configured to perform such meth-
od is also disclosed.

Figure 1

**EP 4 439 742 A1**

## Description

The present disclosure generally relates to a method for controlling a fuel cell and a fuel cell system. Particularly, the present disclosure relates to a method for controlling a fuel cell during operation of the fuel cell by controlling thermal operating parameters of the fuel cell, and a fuel cell system configured to perform such method.

A conventional fuel cell system and method of operating the same are designed in view of assumed and predicted operating conditions. For instance, a maximum and minimum power output requirement of a fuel cell is determined and the fuel cell is then made and operated to fulfil these power output requirements.

For example, a current intensity during operation of the fuel cell is predicted, and a polarisation curve is developed based on the current intensity. This includes employing mathematical models and simulations. Once an optimal polarisation curve is found, the corresponding fuel cell can be manufactured and operated.

However, such models and simulations are based on rather static operating conditions and/or an ideal fuel cell stack and ideal internal fuel cell conditions.

It is therefore an object of the present disclosure to provide a method for controlling a fuel cell during operation and an associated fuel cell system, in order to optimise the fuel cell operation.

This object is solved by the present invention as defined in the independent claims. Preferred embodiments are defined by the dependent claims.

According to a first aspect to better understand the present disclosure, a method for controlling a fuel cell during operation of the fuel cell comprises determining a power requirement of a load electrically connected with the fuel cell. The load electrically connected to the fuel cell is a power consumer of the power generated by the fuel cell. The power requirement of this load is meant for a present time, i.e. an instant moment or predefined time period following the determination. Thus, dynamic loads of the fuel cell can be determined and controlled.

The method further comprises sensing an electromotive force of the fuel cell, and determining an available electrical power from the fuel cell based on the sensed electromotive force of the fuel cell. The sensed electromotive force of the fuel cell is the theoretical maximum voltage of the fuel cell, i.e. that could be theoretically available if no load is supplied with power from the fuel cell.

The available electrical power from the fuel cell is determined on specific characteristics of the fuel cell. For example, a predetermined polarisation curve can be employed to determine the available electrical power. Alternatively or additionally, the available electrical power can be directly looked-up based on the sensed electromotive force.

Furthermore, the method includes calculating a deviation between the determined power requirement of the load and the available electrical power from the fuel cell, and controlling thermal operating parameters of the fuel cell to compensate for the calculated deviation.

Thus, during operation of the fuel cell the method allows optimising the available electrical power from the fuel cell with respect to a power requirement of a load supplied with power from the fuel cell. This allows "on-the-fly" (online) adaptation of the operating parameters of the fuel cell to dynamically operate the fuel cell. Therefore, the operation conditions of the fuel cell can be corrected and optimised, which avoids degradation of the fuel cell and/or an efficiency loss during operation of the fuel cell.

The fuel cell converts chemical energy, e.g. from hydrogen and oxygen, into electricity, heat and water. Amongst others, a ratio of liquid and gaseous product water in the fuel cell defines the operation condition and efficiency of the fuel cell. An equilibrium between gaseous and liquid water should be reached, so that the fuel cell can operate under a steady-state operation, which facilitates the lifespan of the fuel cell. For instance, if the amount of liquid water increases, the electromotive force increases. A higher amount of liquid water leads to a higher amount of condensation heat, which needs to be discharged, e.g. by a coolant system cooling the fuel cell. For instance, to handle the higher amount of heat, a larger heat exchanger or larger amount of coolant is necessary. For both cases a larger engine and, hence, a heavier engine will be the result.

Moreover, a higher amount of heat is wasted when removing the water from the cell, since the mass flow of water is higher than of gaseous water. This, however, leads to an efficiency loss of the fuel cell due to the heat loss.

Furthermore, if air supplied to the fuel cell (e.g., as source of oxygen) has a low temperature, the ratio may also shift towards liquid water. If this shift is not recognised, more liquid water is produced which leads to higher waste heat (efficiency loss) and an increase in the catalyst degradation rate.

The disclosed method operates dynamically (online), by comparing a power requirement of a load of the fuel cell with the available electrical power. By controlling thermal operating parameters of the fuel cell, the equilibrium can be maintained (before a shift develops). This comparison between the power requirement of a load with the available electrical power as well as the controlling of thermal operating parameters can be performed at any time interval. As a mere example, the comparison and the controlling may be performed at a frequency between 0.25 Hz to 5 Hz, preferably at a frequency between 0.5 Hz and 2 Hz, and most preferably at a frequency of 1 Hz, i.e. every second.

Conventionally, if a decreased available electrical power from the fuel cell is determined at the load, as it is sometimes performed, the correction of operating parameters of the fuel cell will take time. This results in a negative impact on the fuel cell as well as bad performance of the load.

In an implementation variant, controlling thermal operating parameters can include one or more of controlling a mass flow of coolant conveyed by a coolant conveyor through the fuel cell, controlling a volumetric flow of air provided to the fuel cell, and controlling an air pressure of the air provided to the fuel cell. By changing the mass flow of coolant the temperature of the fuel cell can be increased or decreased, so that equilibrium of liquid and gaseous product water is maintained at the desired ratio. Likewise, depending on the air temperature provided to the fuel cell, the temperature of the fuel cell can be increased or decreased. When controlling an air pressure of the air provided to the fuel cell, the volume flow of air can be increased or decreased. For instance, a higher air pressure leads to a higher air density, which improves the oxygen supply and thus increases the fuel cell stack efficiency.

In a further implementation variant the method can further comprise sensing a temperature of a coolant at a coolant inlet of the fuel cell and a temperature of the coolant at a coolant outlet of the fuel cell, and calculating a thermal power forming part of the electromotive force of the fuel cell based on a difference between the sensed temperatures at the coolant inlet and outlet. The coolant, for example, can be part of a cooling circuit and can be conveyed by a coolant conveyor through the fuel cell and an external heat exchanger. The electromotive force of the fuel cell can be interpreted as including an electrical power portion and a thermal power portion, wherein the thermal power portion can be calculated by

$$P_{th} = \dot{m} * c_v * \Delta T \quad (1)$$

where $\dot{m} * c_v$ is the thermal mass in J/Ks and $\Delta T$ is the temperature difference between the coolant inlet and the coolant outlet in K.

In another implementation variant, the mass flow $\dot{m}$ and temperature difference $\Delta T$ can alternatively or additionally relate to an air flow provided to the fuel cell, for example, as a source of oxygen. The temperature difference $\Delta T$ could then be measured at an inlet and outlet of into and out of the fuel cell.

In any case, when calculating the deviation of electrical power in the method, this can be based at least in part on the calculated thermal power $P_{th}$.

As a mere example, the electromotive force can be calculated as

$$U_{EMF} = (P_{th} + P_{el})/I \quad (2)$$

$$P_{el} = U * I \quad (3)$$

wherein $P_{el}$ is the electrical power, $U$ and $I$ are respectively a voltage and current of an electric circuit including the fuel cell and the load. $U$ and $I$ can likewise be measured at any time in this electric circuit.

If for instance $\Delta T$ is measured in a cooling circuit at an inlet and outlet of the fuel cell, and $\dot{m}$ is measured at a conveying device (or at the inlet or outlet) of the cooling circuit, the thermal power can be calculated. The resulting electric power $P_{el}$ according to equation (3) can then be set as the available electrical power of the fuel cell.

Furthermore, the electromotive force can be calculated based on equations (1) to (3), and strongly depends on the thermal conditions of the fuel cell. Thus, if the power requirement of the load indicates a different required electrical power than what is available from the electric power $P_{el}$ according to the presently calculated electromotive force $U_{EMF}$, the method can adapt the thermal operating parameters to achieve an electromotive force $U_{EMF}$ matching the power requirement of the load.

In yet a further implementation variant, the method can further comprise determining a Gibbs free energy of the fuel cell for a present operating status of the fuel cell, wherein calculating the deviation of electrical power is based on the determined Gibbs free energy.

While the Gibbs free energy can be looked up and is well-known for a liquid and gaseous equilibrium of water under certain conditions, the electromotive force can be calculated as

$$U_{EMF} = -\Delta G/z * F \quad (4)$$

wherein $\Delta G$ is the Gibbs free energy in kJ/mol, z is the number of electrons involved in the electrode reaction, and F is the Faraday constant in As/mol.

Thus, a deviation between the electromotive force $(U_{EMF})$ derived on the basis of the Gibbs free energy (equation (4)) and the electromotive force sensed at the fuel cell (equations (1) to (3)) can be determined. The thermal operating parameters of the fuel cell can then be changed (controlled), to compensate for the deviation.

In yet another implementation variant, the determining of the power requirement of the load comprises retrieving a load profile of the load for a predefined future time period. For example, the load may have a particular operating plan and the required electric power is known in advance. This known required electrical power may be retrievable in form of a profile, for example, in form of required power levels over time. The predefined time period may include any future time, such as five seconds, 10 seconds, 20 seconds, one minute, two minutes, five minutes, 10 minutes, 60 minutes, and even more.

According to a second aspect to better understand the present disclosure, a fuel cell system comprises a fuel cell stack, configured to output a sensor signal indicating an operating parameter of the fuel cell stack, a cooling circuit configured to cool the fuel cell stack, and a control unit.

As a mere example, such fuel cell system can be employed to perform the method of the first aspect or one of its variants. Particularly, the control unit can be configured to perform the method of the first aspect or one of its variants.

Specifically, the control unit of the fuel cell system is configured to determine a power requirement of a load electrically connected with the fuel cell stack. This requirement can be determined directly at the load and/or at a controller controlling the load.

The control unit is further configured to determine an electromotive force of the fuel cell stack based on the sensor signal of the at least one sensor, determine an available electrical power from the fuel cell stack based on the determined electromotive force of the fuel cell stack, calculate a deviation between the determined power requirement of the load and the available electrical power from the fuel cell stack, and control the cooling circuit to adapt thermal operating parameters of the fuel cell stack to compensate for the calculated deviation.

The control unit can operate in real-time (online), i.e. can control the thermal operating parameters of the fuel cell stack as a direct response to the determined and calculated parameters. Thus, the fuel cell stack can be operated in a more constant way, particularly with respect to a liquid and gaseous equilibrium of product water.

In an implementation variant, the cooling circuit can comprise a coolant inlet, a coolant outlet, and a coolant conveyor conveying a coolant from the coolant outlet to the coolant inlet and through the fuel cell stack. This further allows the control unit to be configured, when adapting thermal operating parameters, to:

(1) change a mass flow of coolant conveyed by the coolant conveyor, and/or
(2) change a volumetric flow of air provided to the fuel cell stack, and/or
(3) change an air pressure of the air provided to the fuel cell stack.

It is to be understood that additional or alternative thermal parameters of the fuel cell stack may be adjusted or changed by the control unit. The aim of the control unit is to achieve a (relatively) constant temperature in the fuel cell stack, which leads to a (relatively) constant electromotive force and, hence, an optimal operation of the fuel cell stack. In addition, the control unit is configured to achieve the (relatively) constant temperature in the fuel cell stack based on the power requirement of the load, on which the electromotive force and the available electrical power depend.

In a further implementation variant, the at least one sensor can comprise a coolant inlet temperature sensor configured to sense a temperature of a coolant at the coolant inlet of the fuel cell stack, and a coolant outlet temperature sensor configured to sense a temperature of the coolant at the coolant outlet of the fuel cell stack. It is to be understood that additional temperature and/or pressure sensors can be implemented and provided in or at the fuel cell stack.

In yet a further implementation variant, the control unit can further be configured to calculate a thermal power forming part of the electromotive force of the fuel cell based on a difference between the sensed temperatures at the coolant inlet and outlet, and calculate the deviation of electrical power based at least in part on the calculated thermal power.

The control unit can perform calculations on the basis of equations (1) to (3) as outlined with respect to the first aspect.

In another implementation variant, the mass flow $\dot{m}$ and temperature difference $\Delta T$ can alternatively or additionally relate to an air flow provided to the fuel cell, for example, as a source of oxygen. The temperature difference $\Delta T$ could then be measured at an inlet and outlet of the air flow into and out of the fuel cell. The mass flow can be controlled by a conveyor of air, such as a fan, a compressor, a valve of an air source or the like.

In yet another implementation variant, the control unit can further be configured to determine a Gibbs free energy of the fuel cell stack for a present operating status of the fuel cell stack, and calculate the deviation of electrical power based on the determined Gibbs free energy.

The control unit can perform calculations on the basis of equations (1) to (4) as outlined with respect to the first aspect.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:

Figure 1    schematically illustrates a fuel cell system and vehicle having the same;

Figure 2    schematically illustrates an exemplary polarisation curve;

Figure 3    schematically illustrates an exemplary progression of a load profile and progression of the electromotive force;

Figure 4    schematically illustrates a progression of a load profile and progressions of exemplary electromotive forces; and

Figure 5    illustrates an exemplary flow diagram of a method for controlling a fuel cell.

In the following description, for purposes of explanation and not limitation, specific details are set forth in order to provide a thorough understanding of the present disclosure. It will be apparent to one skilled in the art that the present disclosure may be practiced in other implementations that depart from these specific details.

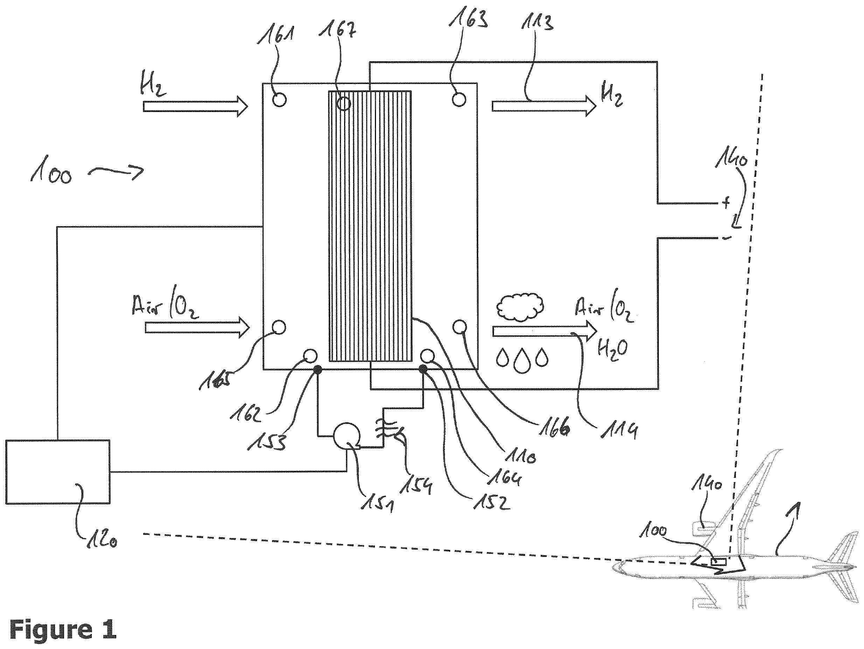

Figure 1 schematically illustrates a fuel cell system 100 and a vehicle 1 having such fuel cell system 100. Although the vehicle 1 is illustrated as an aircraft, it is to be understood that the fuel cell system 100 can be installed and used in any other vehicle, such as a bus, a train, a ship, a car, a motorbike, a bicycle, a wheelchair, etc., or can be installed and used in any other device requiring electric power. For instance, the fuel cell system 100 of the vehicle 1 can supply electric power to any electrical device 140, including a turbine, electronics, control or steering equipment, etc..

Furthermore, the fuel cell system 100 comprises a fuel cell stack 110, a control unit 120 and a cooling circuit 150 configured to cool the fuel cell stack 110. The fuel cell stack can be equipped with at least one sensor 160 configured to output a sensor signal indicating an operating parameter of the fuel cell stack 110

The at least one sensor 160 (161-167 in Figure 1) can include any operational parameter sensor to measure a temperature, pressure and/or a volumetric flow in the fuel cell system 100. As a mere example, sensors 162 and 164 can be temperature sensors sensing a temperature of a coolant at a coolant inlet 152 of the cooling circuit 150 and a temperature of the coolant at a coolant outlet 154 of the cooling circuit 150, respectively.

Furthermore, sensors 161, 165 can be temperature and/or volumetric sensors measuring the temperature and/or volume flow of the hydrogen and air (oxygen) provided to the fuel cell system 100. Illustrated sensors 163, 166 can likewise be temperature and/or volumetric sensors measuring the temperature and/or volume flow of hydrogen and air (oxygen) leaving the fuel cell system 100. Sensor 167 can be a pressure sensor and/or relative humidity sensor and/or temperature sensor in the fuel cell stack 110.

It is to be understood that any other sensor can be employed, if it facilitates operating the fuel cell system 100 in accordance with the present disclosure.

Although the control unit 120 is illustrated separately from the fuel cell stack 110, it is to be understood that the control unit 120 can be arranged anywhere in the fuel cell system 100. The control unit 120 is configured to determine a power requirement of a load 140 electrically connected with the fuel cell stack 110. On the one hand, the power requirement of the load 140 can be determined by receiving a signal and/or data indicating the power requirement, such as a current power output of the load 140. For instance, the power requirement is an electrical power requirement, while the power output may be a mechanical power, heating power, etc.. On the other hand, the power requirement of the load can be determined from a controller (not illustrated) of the load. Thus, when the controller changes a power requirement of the load, the control unit 120 can be directly informed about this change. Such change of power requirement of the load can also be determined in advance. For instance, a load profile of the load 140 may be known in advance, for example, by the controller of the load, so that the control unit 120 can derive such load profile for a future operation of the load 140.

Furthermore, the control unit 120 is configured to determine an electromotive force $U_{EMF}$ of the fuel cell stack 110 based on the sensor signal of the at least one sensor 160, and is further configured to determine an available electrical power $P_{el}$ from the fuel cell stack 110 based on the electromotive force $U_{EMF}$ of the fuel cell stack 110. For instance, the available electrical power $P_{el}$ can be derived directly from an electric circuit comprising the fuel cell stack 110 and the load 140 and/or via the electromotive force $U_{EMF}$ in accordance with a polarisation curve.

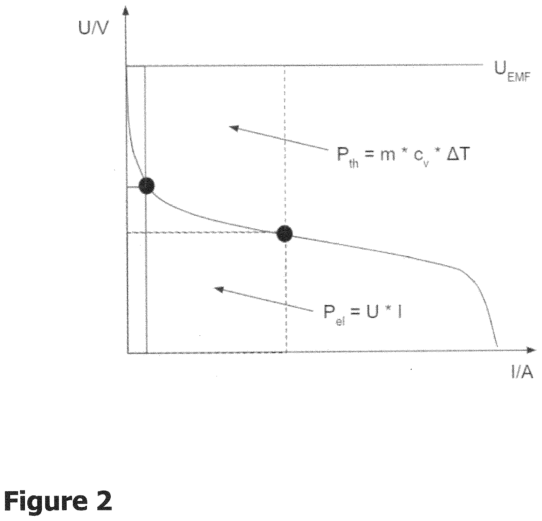

An exemplary polarisation curve is illustrated in Figure 2. The electric voltage of the fuel cell stack 110 depends on the current flow (or current density) through the load 140. Thus, if the present or future current at the load 140 is available, the (available) electric voltage of the fuel cell stack 110 can be derived. As illustrated in Figure 2, the electromotive force $U_{EMF}$ is divided into thermal power $P_{th}$ and electric power $P_{el}$. Thus, if the theoretical (maximum) electromotive force $U_{EMF}$ is derived via the operating parameters of the fuel cell stack 110 (e.g., the thermal power $P_{th}$), the available electric power $P_{el}$ can be compared to the power requirement of the load 140.

Referring back to Figure 1, the control unit 120 is further configured to calculate a deviation between the determined power requirement of the load 140 and the available electrical power $P_{el}$ from the fuel cell stack 110. Based on the calculated deviation, i.e. if the calculated deviation does not equal zero, the control unit 120 is configured to control the cooling circuit 150 to adapt thermal operating parameters of the fuel cell stack 110 to compensate for the calculated deviation.

As a mere example, the temperature of the fuel cell stack 110 influences the electromotive force $U_{EMF}$ as well as available electrical power $P_{el}$. Thus, adapting thermal operating parameters allows adapting the electromotive force $U_{EMF}$ of the fuel cell stack 110 and, hence, the available electrical power $P_{el}$.

As illustrated in Figure 2, the electromotive force $U_{EMF}$ is divided into thermal power $P_{th}$ and electric power $P_{el}$. The thermal power (portion of the electromotive force $U_{EMF}$) depends on a "temperature flow" into and/or out of the fuel cell stack 110. For example, a mass flow of any liquid or gas entering and/or leaving the fuel cell stack 110 may transport thermal energy into and/or out of the fuel cell stack 110. The thermal power $P_{th}$ can be calculated as

$$P_{th} = \dot{m} * c_v * \Delta T \quad (1)$$

where $\dot{m} * c_v$ is the thermal mass in J/Ks (thermal mass flow multiplied by thermal coefficient of the flowing substance (liquid or gas)), and $\Delta T$ is the temperature difference in K between an inlet and an outlet (for the substance) in the fuel cell stack 110. Using the determined electromotive force $U_{EMF}$ of the fuel cell stack 110, the available electric power $P_{el}$ can be calculated and compared to the power requirement of the load 140 (i.e. the deviation is calculated).

If there is a deviation, the control unit 120 can change operating parameters of the fuel cell stack 110, in order to change the thermal mass and/or the temperature difference of above equation (1). By changing the thermal operating parameters of the fuel cell stack 110, the electromotive force $U_{EMF}$ of the fuel cell stack 110 can be changed correspondingly, according to equation (2). This allows a fast adaptation of the operation of the fuel cell stack 110, even before the fuel cell stack 110 operates in an unwanted condition.

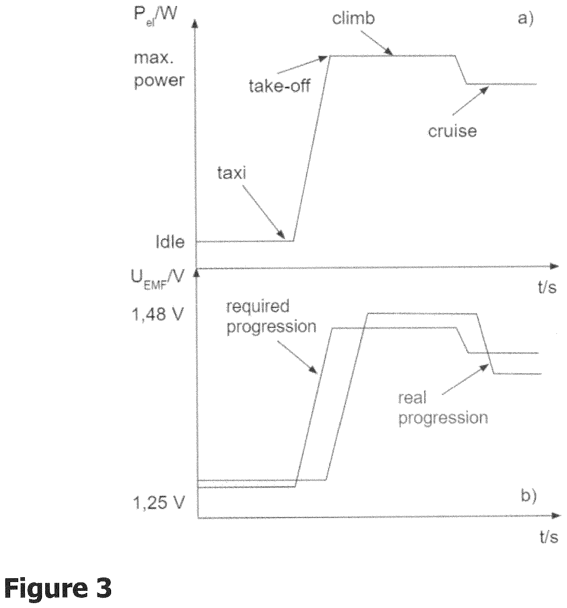

Figure 3 schematically illustrates an exemplary progression of a load profile and progression of the electromotive force $U_{EMF}$ of the fuel cell stack 110. Specifically, in the upper diagram of Figure 3, a load profile or mission profile is illustrated. As a mere example, the fuel cell system 100 can be employed in an aircraft 1 and can be operated during taxiing, take-off, climbed, cruise or similar mission situations, each requiring a particular electrical power. As can be derived from the mission profile, the power requirement of the load 140 is small or zero (idle), if the aircraft 1 is not moving. During taxiing the power requirement of the load 140 increases and is at a maximum at take-off and climbing phase of the aircraft. Once the regular flight altitude is reached, the power requirement of the load 140 decreases slightly from the maximum.

The lower diagram of Figure 3 illustrates the required progression of the electromotive force $U_{EMF}$ of the fuel cell stack 110 for the above described load or mission profile as well as the "real progression", if the fuel cell system 100 would be operated in a conventional manner. As can be derived from Figure 3, the "real progression" would not provide enough available electrical power $P_{el}$ from the fuel cell stack 110, as the fuel cell stack 110 would not operate in the optimal operating parameter range. The "required progression" indicates the actually required available electrical power $P_{el}$ from the fuel cell stack 110 corresponding to the load or mission profile. Thus, the conventional "real progression" is delayed, which brings the operating state of the fuel cell stack 110 into non-optimal conditions.

In order to optimise the operating state of the fuel cell stack 110, and as indicated above, the control unit 120 takes into consideration the thermal power $P_{th}$ of the fuel cell stack 110.

For instance, the cooling circuit 150 can comprise a coolant inlet 152, a coolant outlet 153, and a coolant conveyor 151 conveying a coolant from the coolant outlet 153 to the coolant inlet 152 and through the fuel cell stack. Thus, heat generated in the fuel cell stack 110 can be transferred to the coolant, which transports the heat out of the fuel cell stack 110. For instance, a heat exchanger 154 may be integrated into the cooling circuit 150, in order to cool the coolant.

The control unit 120 can be configured to measure a temperature difference $\Delta T$ in the cooling circuit 150, particularly at the coolant inlet 152 and the coolant outlet 153, via sensors 162 and 164. Additionally or alternatively, a mass flow $\dot{m}$ of the coolant is measured, for example, at the conveying devices 151 or at the coolant inlet 152 or the coolant outlet 153.

Alternatively or additionally, an airflow 112 provided to the fuel cell stack 110 and/or an airflow 114 exiting the fuel cell stack 110 may be employed to measure a temperature difference $\Delta T$ and/or a mass flow $\dot{m}$ of the air entering and leaving the fuel cell system 100. Specifically, this air flow through the fuel cell stack 110 also takes up heat energy from the fuel cell stack 110 and transports it out of the fuel cell system 100.

In any case, the thermal power $P_{th}$ of the fuel cell stack 110 can be derived at any time. Likewise, the coolant flow and/or air flow can be changed, in order to control the thermal operating parameters of the fuel cell system 100. As a mere example, the coolant conveyor 151 may be controlled, so that less or more coolant is conveyed through the fuel cell stack 110. Likewise, a volumetric flow of air 112-114 through the fuel cell stack 110 can be changed. Furthermore, the control unit 120 can control an air pressure in the fuel cell system 100 or fuel cell stack 110.

The operating conditions of the fuel cell stack 110 depend on the temperature, pressure and relative humidity in the fuel cell stack 110. As is known, the fuel cell stack 110 converts hydrogen and oxygen into electrical energy, heat and product water. The product water is usually required to a certain extent, in order to operate the fuel cell stack 110 in wet conditions. However, if the amount of liquid water in the fuel cell stack 110 increases, the efficiency of the fuel cell stack 110 decreases. On the one hand, liquid water can carry more thermal energy, which will leave the fuel cell stack 110, as the water has to be removed over time. On the other hand, the ratio of liquid and gaseous water influences the electromotive force $U_{EMF}$ of the fuel cell stack 110.

Specifically, the electromotive force $U_{EMF}$ of a fuel cell depends on the Gibbs free energy, which depends on the ratio of liquid and gaseous water in the fuel cell stack 110. Every ratio has its own Gibbs free energy value.

While the Gibbs free energy can be looked up and is well-known for a liquid and gaseous equilibrium of water under certain conditions, the electromotive force $U_{EMF}$ can be calculated as

$$U_{EMF} = -\Delta G / z * F \quad (4)$$

wherein $\Delta G$ is the Gibbs free energy in kJ/mol, z is the number of electrons involved in the electrode reaction, and F is the Faraday constant in As/mol.

Thus, when the present certain condition of the fuel cell stack 110 is known, the control unit 120 can operate the fuel cell system 100 in the required manner. For example, temperature, pressure and/or relative humidity inside of the fuel cell stack 110 can be sensed or measured via sensors 160. Based on these conditions, the Gibbs free energy can be looked up (for example, in a corresponding lookup table or database). Then the electromotive force $U_{EMF}$ of the fuel cell stack 110 can be determined according to equation (4) and the thermal operating parameters can be controlled.

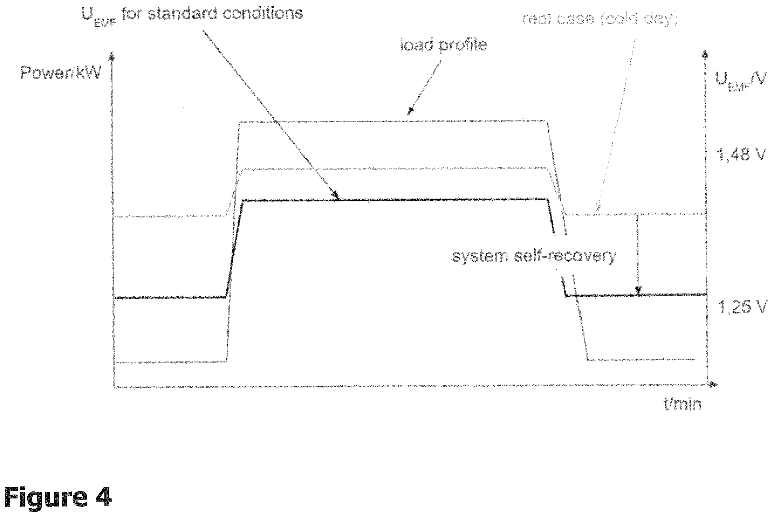

Figure 4 schematically illustrates a progression of a load profile and progressions of exemplary electromotive forces $U_{EMF}$ of a fuel cell stack 110. The load profile can be that of Figure 3 and indicates the power requirement of the load 140. The "real case" curve illustrates the progression of an exemplary electromotive force $U_{EMF}$ if operating the fuel cell stack 110 under "normal" conditions. The fuel cell system 100 can take into account external conditions, such as cold air 112 supplied to the fuel cell system 100. As can be derived from Figure 4, the "real case" would lead to an electromotive force $U_{EMF}$ of the fuel cell stack 110 that is too high. Under control of the control unit 120, the thermal operating parameters of the fuel cell stack 110 are adapted to compensate for the deviation.

As a mere example, a mass flow of coolant conveyed by the coolant conveyor 151 may be reduced, in order to warm the fuel cell stack 110 (actually cool the fuel cell stack 110 less by the cooling circuit 150). Alternatively or additionally, a volumetric flow of air 112 into the fuel cell stack 110 can be reduced and/or a pressure inside of the fuel cell stack 110 can be increased, in order to raise the temperature of the fuel cell stack 110. Thus, the progression of the electromotive force $U_{EMF}$ can be optimised and can be brought to the progression curve "system self-recovery". The fuel cell system 100, hence, operates in optimised conditions.

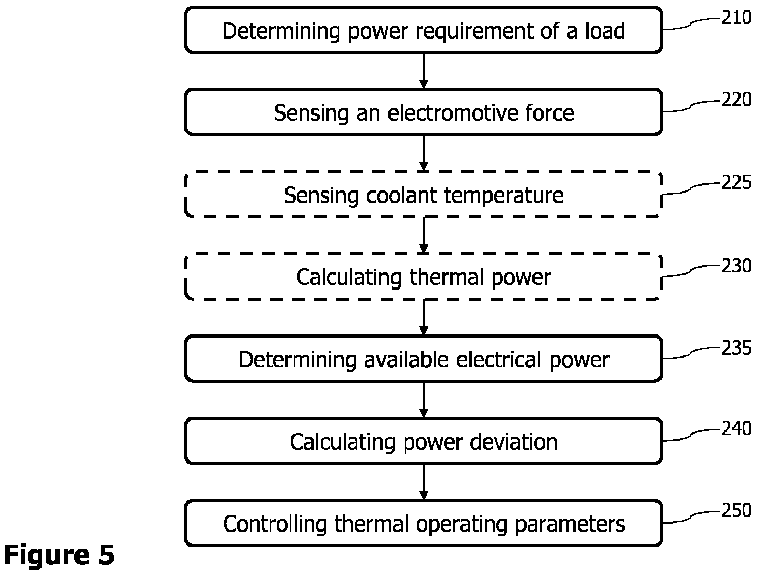

Figure 5 schematically illustrates a flow diagram of a method for controlling a fuel cell 100 during operation of the fuel cell 100.

In a first step 210, a power requirement of a load 140 electrically connected with the fuel cell system 100 is determined. Thereafter or simultaneously, in step 220, and electromotive force $U_{EMF}$ of the fuel cell system 100 is sensed. Based on the sensed electromotive force $U_{EMF}$ of the fuel cell system 100, in step 230, an available electrical power $P_{el}$ is determined. As a mere example, in optional step 225, a temperature of a coolant of the fuel cell system 100 can be sensed. For instance, a temperature of the coolant at a coolant inlet 152 and/or a temperature of the coolant at a coolant outlet 153 can be measured or sensed. In this case, in the further optional step 230, a thermal power $P_{th}$ forming part of the electromotive force $U_{EMF}$ is calculated based on a difference between the sensed temperatures at the coolant inlet and outlet.

In step 240, a deviation between the determined power requirement of the load 140 and the available electrical power $P_{el}$ from the fuel cell system 100 is calculated. This may be based at least in part on the calculated thermal power $P_{th}$ from steps 225 and 230, if this option is performed.

In any case, in step 250, thermal operating parameters of the fuel cell system 100 are controlled to compensate for the calculated deviation between power requirement and available electrical power $P_{el}$.

## Claims

1. A method for controlling a fuel cell (100) during operation of the fuel cell (100), the method comprising:

   determining (210) a power requirement of a load (140) electrically connected with the fuel cell (100);
   sensing (220) an electromotive force ($U_{EMF}$) of the fuel cell (100);
   determining (235) an available electrical power ($P_{el}$) from the fuel cell (100) based on the sensed electromotive force ($U_{EMF}$) of the fuel cell (100);
   calculating (240) a deviation between the determined power requirement of the load (140) and the available electrical power ($P_{el}$) from the fuel cell (100); and
   controlling (250) thermal operating parameters of the fuel cell (100) to compensate for the calculated deviation.

2. The method according to claim 1, wherein controlling (250) thermal operating parameters includes one or more of controlling a mass flow of coolant conveyed by a coolant conveyor (151) through the fuel cell (100), controlling a volumetric flow of air (112) provided to the fuel cell (100), and controlling an air pressure of the air (112) provided to the fuel cell (100).

3. The method according to claim 1 or 2, the method further comprising:

   sensing (225) a temperature of a coolant at a coolant inlet (152) of the fuel cell (100) and a temperature of the coolant at a coolant outlet (153) of the fuel cell (100); and
   calculating (230) a thermal power ($P_{th}$) forming part of the electromotive force of the fuel cell (100) based on a difference between the sensed temperatures at the coolant inlet and outlet (152, 153),

wherein calculating (240) the deviation of electrical power is based at least in part on the calculated thermal power ($P_{th}$).

4. The method according to one of claims 1 to 3, the method further comprising:

   determining a Gibbs free energy of the fuel cell (100) for a present operating status of the fuel cell (100),
   wherein calculating (240) the deviation of electrical power is based on the determined Gibbs free energy.

5. The method according to one of claims 1 to 4, wherein determining (210) the power requirement of the load (140) comprises retrieving a load profile of the load (140) for a predefined future time period.

6. A fuel cell system (100), comprising:

   a fuel cell stack (110);
   at least one sensor (160) configured to output a sensor signal indicating an operating parameter of the fuel cell stack (110);
   a cooling circuit (150) configured to cool the fuel cell stack (110); and
   a control unit (120) configured to:

      determine a power requirement of a load (140) electrically connected with the fuel cell stack (110),
      determine an electromotive force ($U_{EMF}$) of the fuel cell stack (110) based on the sensor signal of the at least one sensor (160),
      determine an available electrical power ($P_{el}$) from the fuel cell stack (110) based on the electromotive force ($U_{EMF}$) of the fuel cell stack (110),
      calculate a deviation between the determined power requirement of the load (140) and the available electrical power ($P_{el}$) from the fuel cell stack (110), and
      control the cooling circuit (150) to adapt thermal operating parameters of the fuel cell stack (110) to compensate for the calculated deviation.

7. The system according to claim 6, wherein the cooling circuit (150) comprises:

   a coolant inlet (152);
   a coolant outlet (153); and
   a coolant conveyor (151) conveying a coolant from the coolant outlet (153) to the coolant inlet (152) and through the fuel cell stack (110),
   wherein the control unit (120), when adapting thermal operating parameters, is configured to:

change a mass flow of coolant conveyed by the coolant conveyor (151), and/or
change a volumetric flow of air (112) provided to the fuel cell stack (110), and/or
change an air pressure of the air (112) provided to the fuel cell stack (110).

8. The system according to claim 6 or 7, wherein the at least one sensor (160) comprises a coolant inlet temperature sensor (162) configured to sense a temperature of a coolant at the coolant inlet (152) of the fuel cell stack (110), and a coolant outlet temperature sensor (164) configured to sense a temperature of the coolant at the coolant outlet (153) of the fuel cell stack (110).

9. The system according to claim 8, wherein the control unit (120) is configured to:

   calculate a thermal power ($P_{th}$) forming part of the electromotive force of the fuel cell (100) based on a difference between the sensed temperatures at the coolant inlet and outlet (152, 153), and
   calculate the deviation of electrical power based at least in part on the calculated thermal power ($P_{th}$).

10. The system according to one of claims 6 to 9, wherein the control unit (120) is configured to:

    determine a Gibbs free energy of the fuel cell stack (110) for a present operating status of the fuel cell stack (110), and
    calculate the deviation of electrical power based on the determined Gibbs free energy.

**Figure 1**

EP 4 439 742 A1

**Figure 2**

Figure 3

Figure 4

EP 4 439 742 A1

210 — Determining power requirement of a load

220 — Sensing an electromotive force

225 — Sensing coolant temperature

230 — Calculating thermal power

235 — Determining available electrical power

240 — Calculating power deviation

250 — Controlling thermal operating parameters

**Figure 5**

Europäisches
Patentamt

European
Patent Office

Office européen
des brevets

# EUROPEAN SEARCH REPORT

Application Number

EP 23 16 5136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/040219 A1 (NAGANUMA YOSHIAKI [JP] ET AL) 14 February 2013 (2013-02-14) * paragraph [0047] – paragraph [0083]; figures 4,5,6 * | 1-10 | INV. H01M8/0432 H01M8/04537 H01M8/04746 |
| A | JP 2011 113647 A (TOYOTA MOTOR CORP) 9 June 2011 (2011-06-09) * paragraphs [0022], [0058], [0059] * | 1-10 | |
| A | US 2007/065695 A1 (MAIER OLIVER [DE] ET AL) 22 March 2007 (2007-03-22) * paragraphs [0020] – [0027] * | 1-10 | |

TECHNICAL FIELDS
SEARCHED      (IPC)

H01M

The present search report has been drawn up for all claims

| Place of search | Date of completion of the search | Examiner |
|---|---|---|
| Munich | 22 September 2023 | Raimondi, Fabio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 5136

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2023

| Patent document cited in search report | | Publication date | Patent family member(s) | | Publication date |
|---|---|---|---|---|---|
| US 2013040219 | A1 | 14-02-2013 | CN | 102859771 A | 02-01-2013 |
| | | | DE | 112010005520 T5 | 21-02-2013 |
| | | | JP | 5590120 B2 | 17-09-2014 |
| | | | JP | WO2011135610 A1 | 18-07-2013 |
| | | | US | 2013040219 A1 | 14-02-2013 |
| | | | WO | 2011135610 A1 | 03-11-2011 |
| JP 2011113647 | A | 09-06-2011 | JP | 5310503 B2 | 09-10-2013 |
| | | | JP | 2011113647 A | 09-06-2011 |
| US 2007065695 | A1 | 22-03-2007 | DE | 102006044287 A1 | 05-04-2007 |
| | | | US | 2007065695 A1 | 22-03-2007 |

EPO FORM P0459

For more details about this annex : see Official Journal of the European Patent Office, No. 12/82